# EUROPÄISCHE PATENTSCHRIFT

(11) **EP 3 069 166 B1**
(45) Veröffentlichungstag und Bekanntmachung des Hinweises auf die Patenterteilung: **12.04.2023**
(21) Anmeldenummer: 14793511.8
(22) Anmeldetag: 30.10.2014
(51) Int. Cl.: G01S 15/931, G01S 7/52, G01S 15/87, G01S 7/56

(54) **KRAFTFAHRZEUG MIT VERDECKUNGSERKENNUNG FÜR ULTRASCHALLSENSOREN**
MOTOR VEHICLE WITH OCCLUSION DETECTION FOR ULTRASONIC SENSORS
VÉHICULE AUTOMOBILE MUNI D'UNE IDENTIFICATION DE L'OCCULTATION DE CAPTEURS D'ULTRASONS

(30) Priorität: 14.11.2013 DE 102013223240
(43) Veröffentlichungstag der Anmeldung: 21.09.2016
(73) Patentinhaber: Volkswagen Aktiengesellschaft, 38440 Wolfsburg (DE)
(72) Erfinder: MOSSAU, Daniel, 38448 Wolfsburg (DE); BAUMANN, Peter, 38114 Braunschweig (DE); CARSTEN, Heinecke, 38486 Klötze (DE); TANNER, Manuel, 01159 Dresden (DE); SANNY, Knut, 38553 Vordorf (DE)
(86) Internationale Anmeldenummer: PCT/EP2014/073374
(87) Internationale Veröffentlichungsnummer: WO 2015/071110

(56) Entgegenhaltungen:
- EP-A1- 2 523 015
- DE-A1- 10 142 075
- DE-A1- 19 805 515
- DE-A1-102010 021 960

## Beschreibung

Die Erfindung betrifft ein Verfahren zum Überprüfen eines Ultraschallsensors eines Kraftfahrzeugs daraufhin, ob der Ultraschallsensor durch ein Objekt verdeckt ist, das an dem Kraftfahrzeug selbst angeordnet ist. Das Objekt kann beispielsweise eine Eisschicht sein. Die Verdeckung wird in Abhängigkeit von einer Ausschwingdauer ermittelt, also der Dauer eines Abklingens einer Eigenschwingung der Membran, nachdem diese zum Aussenden eines Ultraschallsignals mit einem Anregungsimpuls beaufschlagt worden ist.

Aus der DE 10 2010 021 960 A1 ist ebenfalls bekannt, zum Erkennen eines blockierten Zustands eines Ultraschallsensors die Nachschwingzeitdauer zu messen. Der Ultraschallsensor wird im Stand der Technik aber als blockiert eingestuft, wenn die Nachschwingzeitdauer einen vorbestimmten Grenzwert überschreitet. Dann kann davon ausgegangen werden, dass an der Membran Eis oder Schmutz haftet, weil hierdurch die Massenträgheit der Membran vergrößert ist. Aus dem Stand der Technik ist auch bekannt, zum Plausibilisieren einer erkannten Blockade mittels des Ultraschallsensors weiterhin ein Echo des Anregungsimpulses zu messen und daraus einen Abstandswert zu ermitteln. Ändert sich dieser Abstandswert auch bei einer Eigenbewegung des Kraftfahrzeugs nicht, so handelt es sich mit hoher Wahrscheinlichkeit um ein an der Membran haftendes Objekt.

Aus der DE 10 2009 040 992 A1 ist bekannt, anstelle der Ausschwingzeitdauer die Ausschwingfrequenz zu messen. Ist die Membran vereist oder haftet daran Schmutz, so ändert sich die Biegesteifigkeit der Membran, was in einer veränderten Ausschwingfrequenz resultiert.

Die Erkennung einer zugeschneiten Membran anhand einer Überschreitung einer Ausschwingzeitdauer ist auch aus der DE 101 42 075 A1 bekannt. Zum Plausibilisieren einer erkannten Verdeckung wird auch noch die Außentemperatur überwacht.

Aus der DE 101 64 760 B4 ist bekannt, beim Abstellen eines Kraftfahrzeugs und Abstellen des Motors, also beim Beenden eines Fahrbetriebs, den letzten Abstandswert zu speichern, der mittels eines Ultraschallsensors zu einem fahrzeugfremden Objekt gemessen wurde. Wird dann das Kraftfahrzeug wieder gestartet, also der Fahrbetrieb erneut aufgenommen, wird erneut ein Abstandswert gemessen. Durch Vergleichen der Abstandswerte wird ermittelt, ob während des Parkens des Kraftfahrzeugs Schnee oder Schlamm an die Membran des Ultraschallsensors gelangt ist.

Im Zusammenhang mit einem Radarsensor ist aus der DE 10 2007 026 033 A1 bekannt, einen Abstandswert eines Kraftfahrzeugs zu einem mittels des Radarsensors georteten Objekts zu messen und bei einer Eigenbewegung des Kraftfahrzeugs den Radarsensor als vereist zu klassifizieren, wenn sich trotz der Eigenbewegung der Abstandswert über mehrere Messzyklen hinweg nicht unverändert. Das Kraftfahrzeug muss sich für eine zuverlässige Erkennung aber mit einer Mindestgeschwindigkeit bewegen.

Aus der DE 10 2005 057 973 A1 ist eine Funktionsprüfung für einen Ultraschallsensor eines Kraftfahrzeugs bekannt, bei welcher ein derart leistungsstarkes Ultraschallsignal ausgestrahlt wird, dass unter herkömmlichen Bedingungen dieses Ultraschallsignal von einem Boden vor dem Kraftfahrzeug reflektiert und wieder empfangen werden müsste. Falls nur ein stark gedämpftes oder gar kein Echo vom Boden empfangen wird, wird von einem verdeckten oder defekten Ultraschallsensor ausgegangen.

Die mittels Ultraschallsensoren ermittelten Abstandswerte zu Fremdobjekten in der Umgebung des Kraftfahrzeugs können in eine digitale Umfeldkarte eingetragen werden, um die relativen Positionen der Fremdobjekte unter Berücksichtigung von Eigenbewegungen des Kraftfahrzeugs auch dann ermitteln zu können, falls die Fremdobjekte nicht mehr im Erfassungsbereich der Sensoren liegen. Hierzu ist beispielsweise ein Rangierverfahren für Fahrzeuge aus der DE 10 2007 030 769 A1 bekannt. Auch aus der WO 2009/119577 A1 ist eine solche digitale Umfeldkarte bekannt.

Die EP 2 523 015 A1 betrifft ein Verfahren zum Ausblenden eines irrelevanten Objekts beim Detektieren eines Hindernisses. Dabei wird zu einem Sendezeitpunkt ein Sendesignal durch einen Sensor ausgesendet und zu einem Empfangszeitpunkt ein entsprechendes Echo empfangen. Anschließend wird überprüft, ob der Empfangszeitpunkt innerhalb eines vorgegebenen Zeitfensters bezüglich des Sendezeitpunkt legt. Das Echo wird als zu dem irrelevanten Objekt, beispielsweise einer eigenen Anhängerkupplung, gehörend interpretiert, falls der Empfangszeitpunkt innerhalb des vorgegebenen Zeitfensters liegt und außerdem ein Kriterium erfüllt ist.

Die beschriebene Ausschwingdauer der Membran eines Ultraschallsensors kann wie folgt definiert sein: Die Ausschwingdauer kann mit der Beaufschlagung durch den Anregungsimpuls beginnen und kann enden, falls die maximale Amplitude einer Schwingungsperiode der Eigenschwingung kleiner als ein vorbestimmter Grenzwert ist.

Eine Ausschwingdauer einer freien, unblockierten Membran kann z.B. in einem Bereich von 1000 µs bis 1400 µs liegen. Eine mit Eis oder Schmutz behaftete Membran kann dagegen eine Ausschwingdauer aufweisen, die größer als 2000 µs ist. Die Erkennung einer Verdeckung der Membran anhand einer verlängerten Ausschwingdauer hat sich für den Fall als problematisch erwiesen, dass ein Echo eines Fremdobjekts gerade dann auf den Ultraschallsensor trifft, wenn die Eigenschwingungsamplitude den erwähnten Amplitudenschwellenwert unterschreitet. Dann wird die Beendigung der Eigenschwingung nicht erkannt, sondern die Eigenschwingung zusammen mit dem eintreffenden Echo als verlängertes Ausschwingen gemessen. Für diesen Fall darf aber der Ultraschallsensor nicht als blockiert oder verdeckt eingestuft werden, sondern es muss ein Warnsignal für ein nahe am Kraftfahrzeug befindliches Hindernis ausgegeben werden. Ansonsten ist das System nicht sicher.

Ein weiteres Problem mit der Messung der Ausschwingdauer besteht darin, dass sich die Ausschwingdauer nur verändert, falls Schmutz oder Eis unmittelbar an der Membran selbst haftet, so dass sich deren dynamisches Verhalten verändert. Bei besonders dicken Schmutz- oder Eiskrusten hat sich aber gezeigt, dass diese Krusten nicht mit der Membran mitschwingen, sondern sich stattdessen die Membran von der Kruste löst und darunter frei mit nur geringfügig veränderter Ausschwingdauer schwingt. Somit kann auch bei einer dicken Verkrustung anhand der Ausschwingdauer nicht die Verdeckung des Ultraschallsensors erkannt werden.

Der Erfindung liegt die Aufgabe zugrunde, zuverlässig eine Verdeckung eines Ultraschallsensors eines Kraftfahrzeugs zu erkennen.

Die Aufgabe wird durch die Gegenstände der unabhängigen Patentansprüche gelöst. Vorteilhafte Weiterbildungen der Erfindung ergeben sich durch die Merkmale der abhängigen Patentansprüche.

Mittels des erfindungsgemäß bereitgestellten Verfahrens wird ein Ultraschallsensor eines Kraftfahrzeugs auf eine Verdeckung hin überprüft, also eine Verdeckung seiner Membran durch ein am Kraftfahrzeug selbst und im Erfassungsbereich des Ultraschallsensors angeordnetes Objekt, wie beispielsweise eine Eisschicht oder eine Schmutzschicht. Der überprüfte Ultraschallsensor ist im Folgenden als erster Ultraschallsensor bezeichnet.

In an sich bekannter Weise wird durch eine hier als Sendeeinheit bezeichnete Schaltung die Membran des ersten Ultraschallsensors mit einem Anregungsimpuls beaufschlagt, so dass also die Membran einen Ultraschall in den Erfassungsbereich abstrahlt. Durch eine hier als Auswerteeinheit bezeichnete Schaltung wird dann ein Messsignal des ersten Ultraschallsensors erfasst, das heißt ein elektrisches, aus einer Schwingung der Membran abgeleitetes Signal. Aus dem Messsignal wird die Ausschwingdauer der durch den Anregungsimpuls bewirkten Eigenschwingung der Membran ermittelt. Als Beginn kann beispielsweise der Zeitpunkt des Beaufschlagens der Membran mit dem Anregungsimpuls festgelegt sein. Als Ende der Ausschwingdauer kann beispielsweise festgelegt sein, dass eine maximale Schwingungsamplitude einer Schwingungsperiode der Membran kleiner als ein vorbestimmter Schwellenwert ist.

Zusätzlich wird noch aus dem Messsignal des ersten Ultraschallsensors selbst oder aus einem Messsignal eines zweiten Ultraschallsensors ein Echo ermittelt, das von einem in dem Erfassungsbereich des ersten Ultraschallsensors angeordneten Objekt durch Reflexion des Anregungsimpulses erzeugt wird. Anhand des Echos wird dann ein Abstandswert des Objekts in an sich bekannter Weise ermittelt. Der Abstandswert gibt den geschätzten Abstand des Objekts vom Kraftfahrzeug an.

Nach dem erfindungsgemäßen Verfahren wird durch die Auswerteeinheit die Verdeckung des ersten Ultraschallsensors nun für den Fall signalisiert, dass die Ausschwingdauer nicht größer, sondern kleiner als ein vorbestimmter Schwellenwert ist. Hierbei handelt es sich um einen ganz bestimmten Schwellenwert. Es ist ein solcher Schwellenwert vorgesehen, der überschritten würde, falls Eis und/oder Schmutz unmittelbar an der Membran selbst haften würde. Mit anderen Worten wird die Verdeckung gerade dann signalisiert, wenn anhand der Ausschwingdauer erkannt wird, dass kein Eis und/oder Schmutz an der Membran selbst haftet und die Membran also mit anderen Worten eine bestimmungsgemäße oder im Wesentlichen bestimmungsgemäße Ausschwingdauer aufweist. Beispielsweise kann der Schwellenwert in einem Bereich von 1800 µs bis 2500 µs liegen. Insbesondere kann er 2000 µs betragen. Bevorzugt ist der Schwellenwert parametrierbar, da die Ausschwingzeit des Sensors von seiner Geometrie, seiner Membran, dem verwendeten Piezoelement und weiteren Faktoren abhängen kann.

Eine weitere Bedingung für das Signalisieren der Verdeckung ist hierbei aber, dass der ermittelte Abstandswert kleiner als ein vorbestimmter Höchstwert ist. Mit anderen Worten kann durch die Auswerteeinheit erkannt worden sein, dass sich ein Objekt in einem Abstand kleiner als der vorbestimmte Höchstabstand nahe am Kraftfahrzeug befindet. Der Höchstwert kann beispielsweise in einem Bereich von 0 cm bis 50 cm, insbesondere in einem Bereich von 0 cm bis 35 cm, bevorzugt in einem Bereich von 0 cm bis 15 cm, liegen. Auch der Höchstwert ist bevorzugt parametrierbar.

Das erfindungsgemäße Verfahren weist den Vorteil auf, dass es eine Verdeckung des ersten Ultraschallsensors signalisiert, die durch eine unmittelbar am Kraftfahrzeug haftende Eisschicht oder Schmutzschicht resultiert, bei der es der Membran möglich ist, frei zu schwingen. Durch die Verifizierung der im Vergleich zum Schwellenwert kleineren Ausschwingdauer ist sichergestellt, dass das erkannte Objekt nicht gerade soweit vom Kraftfahrzeug entfernt ist, dass es zu einer Überlagerung des Echos mit dem Ende der Eigenschwingung kommt, was ja, wie eingangs beschrieben, zu einer vergrößerten Ausschwingdauer führen würde. Damit ist also wegen der normalen Ausschwingdauer klar, dass das Objekt entweder weiter weg oder sich sehr viel näher an dem Kraftfahrzeug befinden muss. Durch die Überprüfung des Abstandswerts dahingehend, dass dieser kleiner als der Höchstwert ist, ist dann klar, dass sich das Objekt unmittelbar am Kraftfahrzeug selbst befinden muss. Hier kann zuverlässig auf ein am Kraftfahrzeug haftendes Objekt oder daran herunterhängendes Objekt rückgeschlossen werden.

Bei der Erfindung wird durch die Auswerteeinheit zumindest eine aus dem Abstandswert ermittelte Position des Objekts in eine in dem Kraftfahrzeug bereitgestellte digitale Umfeldkarte eingetragen, in der zu Hindernissen oder allgemein Fremdobjekten, die zumindest mittels der Ultraschallmessung und optional z.B. mittels Radarmessung erkannt worden sind, deren jeweilige relative Position zum Kraftfahrzeug gespeichert ist. Die Umfeldkarte wird zusätzlich auch auf Grundlage einer odometrisch ermittelten Eigenbewegung des Kraftfahrzeugs aktualisiert, das heißt die Fremdobjekte werden in der Umfeldkarte korrespondierend zur Eigenbewegung des Kraftfahrzeugs verschoben. Bei der Betrachtung des Abstands des beschriebenen Objekts wird nicht nur der einzelne Abstandswert berücksichtigt, sondern es wird auf der Grundlage des Abstandswerts selbst und weiterer in der Umfeldkarte eingetragener Positionen, die mittels des ersten Ultraschallsensors und/oder anderer Sensoren ermittelt wurden, zu dem Objekt ermittelt, ob sich das Objekt mit dem Kraftfahrzeug gleichförmig mitbewegt. Während einer Eigenbewegung des Kraftfahrzeugs wird dann nur bei Erkennen der gleichförmigen Bewegung die Verdeckung signalisiert. Der Fall, dass ein dynamisches Objekt, wie z.B. ein Fremdfahrzeug, sich zufällig bei dem beschriebenen, geringen Abstand mit dem erfindungsgemäßen Kraftfahrzeug mitbewegt und so einen Fehlalarm auslöst, ist derart unwahrscheinlich, dass das Signalisieren der Verdeckung sicherheitstechnisch gerechtfertigt ist. Ändert sich dagegen der Abstand des Objekts, wie er sich aus der Umfeldkarte bezüglich des Kraftfahrzeugs ergibt, so wird die Verdeckung nicht signalisiert.

In Bezug auf die Verwendung einer Umfeldkarte ergibt sich eine weitere vorteilhafte Ausführungsform, wenn für den Fall, dass die Verdeckung signalisiert wird, das Umfeld des Kraftfahrzeugs nicht mehr auf der Grundlage des ersten Ultraschallsensors überwacht wird. Dieser ist ja offensichtlich verdeckt und erkennt keine Fremdobjekte mehr. Vielmehr ist bei dieser Ausführungsform des Verfahrens vorgesehen, in dem Erfassungsbereich des ersten Ultraschallsensors eine Abstandsmessung zu den in der Umfeldkarte verzeichneten, von dem mitbewegten Objekt verschiedenen Fremdobjekten durchzuführen. Ist also der erste Ultraschallsensor beispielsweise durch eine Eisschicht verdeckt, so wird anhand von Kartendaten der Umfeldkarte das Umfeld des Kraftfahrzeugs jenseits der Eisschicht, das heißt der abgeschirmte Erfassungsbereich des ersten Ultraschallsensors, anhand der Umfeldkarte überwacht. Das Messsignal des verdeckten ersten Ultraschallsensors kann ignoriert werden. Mit anderen Worten werden nicht funktionierende Sensoren selektiv ausgeblendet, und es wird trotzdem rudimentär über die Umfeldkarte gewarnt. Dadurch ist eine Teilverfügbarkeit des Ultraschallsystems gewährleistet. Gemäß eine vorteilhaften Weiterbildung wird in der Umfeldkarte der Verdeckt-Zustand eines Sensor angezeigt und/oder der Defektbereich, der aktuell nicht mittels des verdeckten Sensors überwacht werden kann, wird bevorzugt anders als die mittels Ultraschall erfassbaren Bereiche dargestellt. Insbesondere erfolgt diese Darstellung auch dann, wenn bekannte Fremdobjekte in den Defektbereich hinein verfolgt oder getrackt werden, damit die Verfolgung der Fremdobjekte vom Fahrer als ein Tracking anhand von alten Messdaten erkannt wird. Dies zeigt die Messunsicherheit an, da ein Objekt, das z. B. vor 20 sec. dort war, nicht zwangsläufig immer noch da sein muss. Dieses Problem wird dem Fahrer durch die Markierung des Defektbereichs dargestellt, als eine Art unsicherer Bereich. Wird beispielsweise der rechte vordere Ultraschallsensor in dem Kraftfahrzeug blockiert und befindet sich ein Hindernis, welches zuvor mit dem linken Ultraschallsensor vermessen wurde, nach einer Linkskurve vor dem rechten Ultraschallsensor, der ja nicht misst, so kann anhand des Umfeldmodells aus der Umfeldkarte weiterhin der Abstand zu dem Hindernis ermittelt werden und der Fahrer bei Unterschreitung eines Mindestabstands gewarnt werden.

Bevorzugt wird bei signalisierter Verdeckung während eines Fahrbetriebs des Kraftfahrzeugs dem Fahrer die Verdeckung nur für eine vorbestimmte Höchstzeitdauer in dem Kraftfahrzeug akustisch signalisiert.

Hierdurch wird in vorteilhafter Weise vermieden, dass während des Fahrbetriebs, also zwischen einem Start des Antriebsmotors und einem Abschalten des Antriebsmotors, nicht wiederholt beispielsweise bei jedem Ampelstopp, ein akustischer Warnton ausgegeben, was eine unnötige Belastung des Fahrers bedeuten würde. Insbesondere erfolgt die akustische Warnung nur einmalig und/oder für eine Gesamtdauer von höchstens 10 Sekunden, bevorzugt höchstens 5 Sekunden.

Gemäß einer anderen Weiterbildung des erfindungsgemäßen Verfahrens ist vorgesehen, bei signalisierter Verdeckung des ersten Ultraschallsensors diesen von einem Abstandswarnsystem des Kraftfahrzeugs zu entkoppeln. Hierdurch können Fehlauslösungen von Sicherheitskomponenten, wie beispielsweise eines Airbags, verhindert werden.

Bevorzugt wird die Verdeckung über einen Kommunikationsbus, wie beispielsweise einen CAN-Bus (CAN - Controller Areal Network) oder einen FlexRay-Bus, in dem Kraftfahrzeug an eines oder mehrere Steuergeräte signalisiert. Damit steht die Information über die Verdeckung den Steuergeräten bereit, die ihr Betriebsverhalten dann an den Zustand des ersten Ultraschallsensors anpassen können.

Bei der beschriebenen Sendeeinheit kann es sich um die an sich aus dem Stand der Technik bekannte Schaltung zum Betreiben der Membran eines Ultraschallsensors handeln. Bei der Auswerteeinheit kann es sich um eine an sich bekannte Messschaltung zum Ermitteln des Messsignals sowie einen Prozessor handeln, welcher ein Programmmodul aufweist, das zum Durchführen der beschriebenen Schritte zum Ermitteln der verfahrensrelevanten Größen eingerichtet ist. Die Auswerteeinrichtung kann beispielsweise einen Mikroprozessor, Mikrocontroller oder auch ein Steuergerät des Kraftfahrzeugs umfassen. Der genannte Erfassungsbereich eines Ultraschallsensors ist insbesondere derjenige Bereich, aus welchem ein Echo eines Hindernisses mittels des Ultraschallsensors selbst oder eines anderen Ultraschallsensors messtechnisch erfasst wird, falls ein entsprechendes Hindernis vorhanden ist.

Zu der Erfindung gehört auch eine Abstandsmessvorrichtung für ein Kraftfahrzeug, mittels welcher eine Ausführungsform des erfindungsgemäßen Verfahrens durchgeführt wird.

Die Messvorrichtung weist dazu mindestens zwei Ultraschallsensoren sowie eine Recheneinrichtung zum Durchführen der erfindungsgemäßen Verfahrensschritte auf.

Schließlich gehört zu der Erfindung noch ein Kraftfahrzeug mit einer Ausführungsform der erfindungsgemäßen Abstandsmessvorrichtung. Das erfindungsgemäße Kraftfahrzeug ist bevorzugt als Kraftwagen, insbesondere als Personenkraftwagen, ausgestaltet.

Im Folgenden ist die Erfindung anhand eines konkreten Ausführungsbeispiels erläutert. Hierzu zeigt:
- Fig. 1: eine schematische Darstellung einer Ausführungsform des erfindungsgemäßen Kraftfahrzeugs und
- Fig. 2 bis 4: Messwerte, die in dem Kraftfahrzeug von Fig. 1 ermittelt wurden.

Bei dem im folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne und unabhängig voneinander zu betrachtende Merkmale der Erfindung dar, welche die Erfindung jeweils auch unabhängig voneinander weiterbilden und damit auch einzeln oder in einer anderen als der angegebenen Kombination als Bestandteil der Erfindung anzusehen sind. Des Weiteren ist die beschriebene Ausführungsform auch durch weitere der bereits beschriebenen Merkmale der Erfindung ergänzbar.

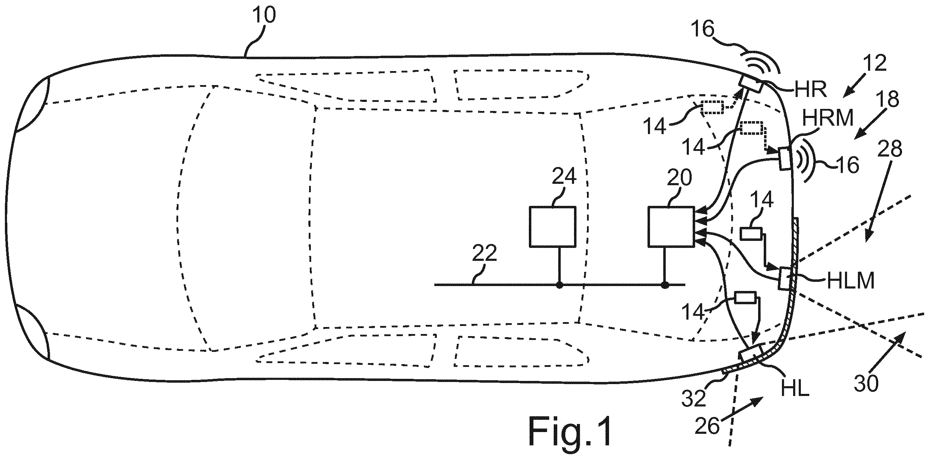

In Fig. 1 ist in aus einer Vogelperspektive ein Kraftfahrzeug 10 gezeigt, bei dem es sich beispielsweise um einen Kraftwagen, insbesondere einen Personenkraftwagen, handeln kann. In einem Heck 12 des Kraftfahrzeugs 10, beispielsweise in einem Stoßfänger, können Ultraschallsensoren angeordnet sein, die in Fig. 1 gemäß ihrer Anordnung hinten rechts "HR", hinten rechts Mitte "HRM", hinten links Mitte "HLM" und hinten links "HL" bezeichnet sind. Die Ultraschallsensoren HR, HRM, HLM, HL können Bestandteil eines Einparkhilfesystems sein. Jeder Ultraschallsensor kann in an sich bekannter Weise ausgestaltet sein und eine Membran aufweisen, die in an sich bekannter Weise durch eine Sendeeinheit 14 mit einem Anregungsimpuls beaufschlagt werden kann, so dass die Membran einen Ultraschall 16 in einen Nahbereich 18 des Kraftfahrzeugs 10 ausstrahlt. Für den Fall, dass sich ein Hindernis oder Fremdobjekt in dem Nahbereich 18 befindet, kann der Ultraschall 16 an dem Hindernis reflektiert werden und als Echo zurück auf die Ultraschallsensoren fallen. In an sich bekannter Weise können dann durch eine Auswerteeinheit 20 beispielsweise mittels der Membranen der Ultraschallsensoren aus dem Echo elektrische Messsignale erzeugt werden. In dem in Fig. 1 gezeigten Beispiel ist eine einzelne Auswerteeinheit 20 dargestellt. Es kann aber auch für jeden Ultraschallsensor eine separate Auswerteeinheit bereitgestellt sein.

Die Auswerteeinheit 20 kann beispielsweise über einen Fahrzeugkommunikationsbus 22, beispielsweise einen CAN-Bus, mit anderen Steuergeräten 24 gekoppelt sein, so dass über den Fahrzeugkommunikationsbus 22 ein Signal über den Zustand der Ultraschallsensoren an die übrigen Steuergeräte 24 übermittelt werden kann. Die Steuergeräte 24 können dann ihr Betriebsverhalten an den Zustand der Ultraschallsensoren anpassen. In dem in Fig. 1 gezeigten Beispiel ist zu den Ultraschallsensoren HL, HLM noch ein Erfassungsbereich 26, 28 kenntlich gemacht, in welchem der jeweilige Ultraschallsensor HL, HLM von einem Hindernis ein reflektiertes Echo empfangen kann, falls sich das Hindernis in dem jeweiligen Erfassungsbereich 26, 28 befindet. Befindet sich das Hindernis in einem Überschneidungsbereich 30 der Erfassungsbereiche 26, 28, so kann beispielsweise auch von dem Ultraschallsensor HL ein Ultraschall ausgesendet werden und das Echo des Hindernisses dann sowohl von dem Ultraschallsensor HL als auch dem Ultraschallsensor HLM empfangen und durch die Auswerteeinheit 20 ausgewertet werden.

In dem der Fig. 1 zugrunde liegenden Beispiel ist angenommen, dass sich an dem Heck 12 eine Eisschicht 32 befindet, welche die Ultraschallsensoren HL und HLM abdeckt oder verdeckt. Eine Bewegungsfreiheit der Membranen der Ultraschallsensoren HL, HLM ist in dem Beispiel durch die Eisschicht 32 aber nicht beeinträchtigt. Ein von der Membran des Ultraschallsensors HL ausgesendeter Ultraschall wird an der Eisschicht 32 unmittelbar reflektiert und als Echo eines Pseudohindernisses wieder zurück zur Membran des Ultraschallsensors HL geworfen. Es kann auch vorkommen, dass der Schall zwischen dem Heck 12 und der Eisschicht 32 am Heck entlang zur Membran des Ultraschallsensors HLM gelangt und dort ebenfalls als Echo erfasst wird.

Bei wiederholten Messzyklen, wenn also jeweils ein Anregungsimpuls auf die Membranen der Ultraschallsensoren gegeben wird und zu diesem Anregungsimpuls die Echos ermittelt werden und daraus ein Abstand möglicher Hindernisse im Nahbereich 18 ermittelt wird, ergibt sich für die durch die Ultraschallsensoren HL und HLM aufgrund der von der Eisschicht 32 verursachten Echos des Pseudohindernisses ein gleichbleibender Abstand, der von der Auswerteeinheit 20 detektiert wird. Bei Bewegung des Kraftfahrzeugs 10 kann daraus durch die Auswerteeinheit 20 geschlossen werden, dass es sich nicht um ein reales, sondern eben um ein "Phantomecho" des Pseudohindernisses handelt. Es wird daher von der Auswerteeinheit 20 zu den Ultraschallsensoren HL und HLM erkannt, dass diese von Vereisung oder Verschmutzung bedeckt sind. Dieser Fall kann sogar unabhängig von der Betrachtung der Ausschwingzeit der Sensoren erkannt werden.

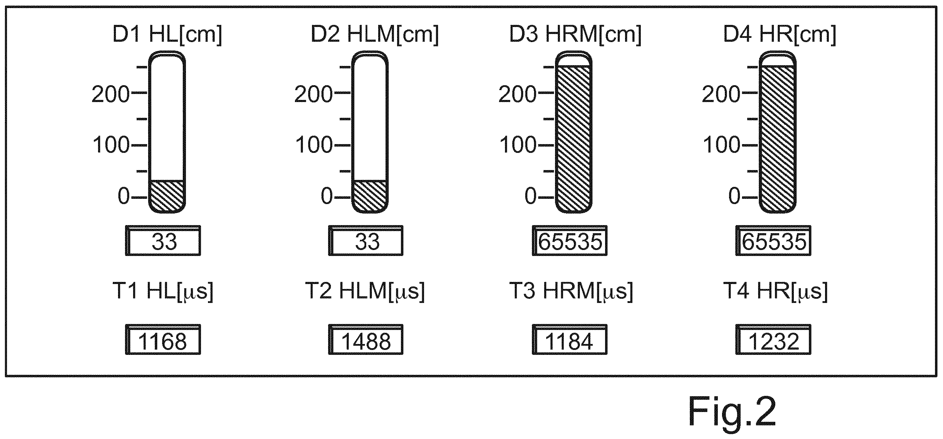

Bisher bekannte Algorithmen haben nur die Ausschwingzeit der Sensormembranen betrachtet. Tests an realen Fahrzeugen in einer kalten Umgebung haben gezeigt, dass sich eine Vereisung, wie die Eisschicht 32, aber auch einstellen kann, ohne dass die Ausschwingzeit deutlich steigt, weil die Membranen selbst nicht mit dem Eis in Berührung kommen. In Fig. 2 sind hierzu beispielhaft Messwerte gezeigt. Dargestellt ist für die Ultraschallsensoren HL, HLM, HRM, HR jeweils ein Distanzwert D1, D2, D3, D4 in der Einheit cm, wie sie durch die Auswerteeinheit 20 für die in Fig. 1 gezeigte Situation beispielhaft ermittelt worden sein können. Die angegebenen Distanzwerte D1 bis D4 stellen Laufwege dar, also die Summe aus Hin- und Rücklaufpfad des Ultraschalls. Aufgrund der Messungenauigkeit wird für die von der Eisschicht 32 bedeckten Ultraschallsensoren HL, HLM ein Abstand von z.B. D1 = D2 = 33 cm ermittelt. Für die Ultraschallsensoren HRM und HR wird jeweils ein maximaler Distanzwert von z.B. D3 = D4 = 65535 ermittelt, was für einen hindernisfreien Erfassungsbereich dieser Ultraschallsensoren steht. Beispielhafte Ausschwingzeiten können sich für den Ultraschallsensor HL zu T1 = 1168 µs, für den Ultraschallsensor HLM zu T2 = 1488 µs, für den Ultraschallsensor HRM zu T3 = 1184 µs und den Ultraschallsensor HR zu T4 = 1232 µs ergeben. Für den Fall, dass Eis oder Schmutz unmittelbar an einer Membran eines der Ultraschallsensoren haften würde, würde sich in dem gezeigten Bespiel eine Ausschwingzeit von größer als 2000 µs ergeben.

Die genannten Werte sind nur beispielhaft und entsprechen einer für den Messversuch verwendeten Parametrierung. Genauso verhält es sich mit den Abstandswerten. Die genannten Werte entstammen einer Messung. Generell sind die Abstände für Pseudo-Hindernisse aufgrund von Eis/Schmutz aber immer im Nahbereich. Bevorzugt sind die beschriebenen Werte parametrierbar, da die Ausschwingzeit jedes Sensors von seiner Geometrie, seiner Membran, dem Piezoelement und sogar weiteren Faktoren abhängen kann.

Anhand der in Fig. 2 gezeigten Messwerte erkennt die Auswerteeinheit 20, dass die Ultraschallsensoren HL, HLM einen Distanzwert anzeigen, der kleiner als ein vorbestimmter Schwellenwert ist. Der Schwellenwert kann beispielsweise in einem Intervall von 33 bis 50 cm liegen. Zugleich wird durch die Auswerteeinheit 20 ermittelt, dass weder die Ausschwingdauer T1 noch die Ausschwingdauer T2 größer als 2000 µs ist, welches in dem Beispiel den Schwellenwert für die Erkennung von an den Membranen haftendem Eis oder Schmutz darstellt.

Die Auswerteeinheit 20 signalisiert deshalb beispielsweise über den Fahrzeugkommunikationsbus 22 beispielsweise an die Steuergeräte 24, dass die Distanzwerte D1, D2 der Ultraschallsensoren HL, HLM keine Distanzen zu realen Hindernissen in den Erfassungsbereichen 26, 28 darstellen, sondern durch Echos an einem am Kraftfahrzeug 10 haftenden Objekt, hier also der Eisschicht 32, verursacht sind. Die Distanzwerte D1, D2 der Ultraschallsensoren HL, HLM werden deshalb nicht bei einer Umfeldüberwachung berücksichtigt, wie sie beispielsweise durch eines der Steuergeräte 24 beispielsweise beim Einparken des Kraftfahrzeugs 10 in eine Parklücke durchgeführt werden kann.

Die in Fig. 2 dargestellte Situation (Vereisung eines Sensors ohne Beeinträchtigung der Ausschwingzeit aber mit "Pseudohindernis" bei ca. <=30cm) stellt im Wesentlichen die Neuerung dar. Reale Hindernisse, die sich sehr nah vorm Sensor befinden, beeinträchtigen fast immer die Ausschwingzeit (erhöhte Ausschwingzeit). Ist letzteres nicht der Fall und bleibt das "Pseudohindernis" auch bei Fahrzeugbewegung bestehen, handelt es sich dennoch mit hoher Wahrscheinlichkeit auch um eine Vereisung/Verschmutzung des Sensors. Wenn darüber hinaus keine Indirektechos zwischen beiden Sensoren (hier: HL und HLM) vorliegen, erhöht das die Wahrscheinlichkeit für Eis/Schmutz nochmals.

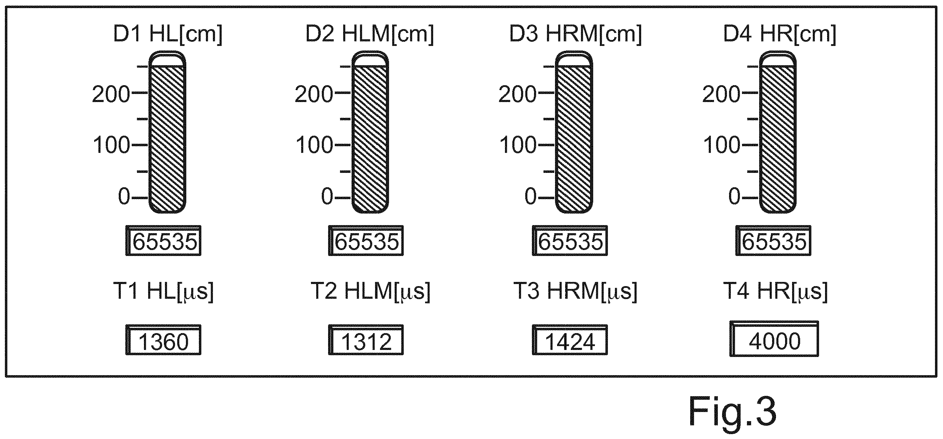

In Fig. 3 ist ein Messergebnis für die Abstandsmessung gezeigt, das in einer Situation erstellt wurde, die von der in Fig. 1 gezeigten Situation verschieden ist. Zum Zeitpunkt der Messung befand sich kein Hindernis im Nahbereich 18. Der Ultraschallsensor HR wies eine Eisschicht auf seiner Membran auf. Die übrigen Ultraschallsensoren waren dagegen frei, das heißt unblockiert. Die Distanzmaße D1, D2, D3, D4 zeigen an, dass kein Hindernis erkannt wurde. Die Ausschwingdauerzeiten T1, T2, T3 weisen auf freie Membranen hin. Die Ausschwingdauer T4 beträgt beispielsweise 4000 µs und ist damit größer als der in dem Beispiel gültige Schwellenwert 2000 µs, der überschritten wird, falls sich Eis auf einer Membran eines Ultraschallsensors befindet. Somit kann aus den in Fig. 3 gezeigten Messwerten erkannt werden, dass der Ultraschallsensor HR abgeschaltet werden muss, weil Eis auf seiner Membran erkannt wurde. Dies kann auch beim Stillstand eines Kraftfahrzeugs erkannt werden.

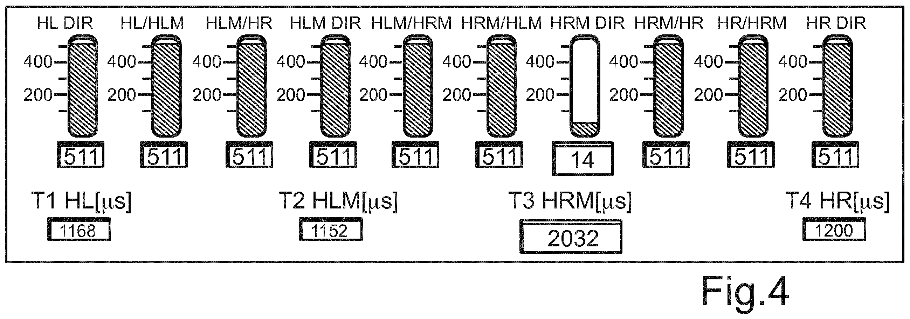

In Fig. 4 ist zu einer weiteren Situation das Messergebnis gezeigt. In Fig. 4 ist dabei zusätzlich veranschaulicht, wie nicht nur eine Distanzmessung mit jeweils einem einzelnen Ultraschallsensor vorgenommen werden kann, sondern beispielsweise ein vom Ultraschallsensor HL ausgesendeter Ultraschall im Falle einer Reflektion auch von dem benachbarten Ultraschallsensor HLM empfangen werden kann. In Fig. 4 ist diese Messung als HUHLM gekennzeichnet. Genauso kann umgekehrt vom Ultraschallsensor HLM abgestrahlter Ultraschall als Echo vom Ultraschallsensor HL empfangen werden, was die Messung HLM/HL ergibt. Die übrigen, in der Fig. 4 gezeigten Messungen haben entsprechende Bezeichnungen Quelle/Empfänger. Das Kürzel DIR gibt den Fall Quelle = Empfänger an. In Fig. 4 ist eine Situation gezeigt, bei welcher sich ein Gegenstand, beispielsweise ein Blatt einer Pflanze, in einem Abstand im Bereich von beispielsweise 10 cm bis 15 cm vor dem Ultraschallsensor HRM befindet. Es befinden sich keine weiteren Hindernisse im Nahbereich 18. Die in Fig. 4 gezeigten Messwerte sind anders skaliert als diejenigen in Fig. 2 und Fig. 3. In Fig. 4 ist in dem Beispiel der Wert 511 der maximalmögliche Messwert, der auf einen freien Erfassungsbereiche des jeweiligen Ultraschallsensors hindeutet. Entsprechend wird zu den Distanzmaßen D1, D2, D4 angezeigt, dass kein Hindernis im Erfassungsbereich ist. Auch die Kreuzmessungen ergeben keinen Hinweis auf ein Hindernis. Der Ultraschallsensor HRM zeigt ein Hindernis in einem Abstand an, der hier den Distanzwert D3 = 14 ergibt. Bei diesem Abstand ergibt sich eine Überlagerung der Eigenschwingung der Membran des Ultraschallsensors HRM mit dem Echo des Hindernisses.

Es überlagern sich die Eigenschwingung und das Echo an der Membran, was bei der Messung der Ausschwingdauer zu einem beispielhaften Wert T = 2032 µs führt. Obwohl die Ausschwingdauer T3 somit größer als der hier gültige Schwellenwert 2000 µs ist, wie er sich bei vereister Membran ergeben kann, kann hier der Ultraschallsensor HRM aufgrund des Wertes D3 = 14 nicht abgeschaltet werden. Es muss davon ausgegangen werden, dass es ein Hindernis vor dem Ultraschallsensor HRM gibt. Eine Abschaltung kann erst beispielsweise bei einer Geschwindigkeit v ≥ 10 km/h des Kraftfahrzeugs 10 vorgenommen werden. Entsprechend hört auch erst dann der Dauerwarnton auf und hört der optische Anzeiger für das Hindernis auf zu blinken. Sobald das Kraftfahrzeug 10 wieder langsamer wird, v < 10 km/h, ergibt sich durch eine erneute Aktivierung des Parksystems wieder der Warnton und das Blinksignal.

Die Messsituation, wie sie in Fig. 4 beispielhaft dargestellt ist, das heißt eine Abstandsmessung, die auf ein nahes Hindernis hinweist (0 cm bis 30 cm) und hierbei eine vergrößerte Ausschwingdauer gemessen wird, also eine Ausschwingdauer, die auf eine vereiste Membran hinweist, wird im Stand der Technik nicht als die Situation "Eis erkannt" angezeigt. Für den Fall, dass sich tatsächlich kein Fremdobjekt vor dem Ultraschallsensor befindet, also im Beispiel von Fig. 4 vor dem Ultraschallsensor HRM, sondern beispielsweise ein loser Gegenstand am Fahrzeug herunterhängt, wie beispielsweise eine Decke oder eine Plane, die aus dem Kofferraum ragt, so wird der Fahrer immer dann, wenn das Kraftfahrzeug die Schwellgeschwindigkeit, z.B. 10 km/h, unterschreitet, den Dauerton als Fehlersignal hören. Insbesondere bei dieser automatischen Aufschaltung eines Parkhilfesystems wird also immer wieder die Warnung ertönen. Diese Warnung bringt keinen Mehrwert und ist für den Fahrer nervig. Die eigentliche Information wäre der Hinweis, dass der Ultraschallsensor offenbar gestört ist, also hier durch einen herabhängenden Gegenstand, und dieser Ultraschallsensor für das Parkhilfesystem deaktiviert wird. In der Regel wird aber mangels Erkennung nicht unterschieden, ob ein Ultraschallsensor blockiert ist oder ob sich ein nahes Hindernis vor dem Ultraschallsensor befindet. Beides führt zu einer dauerhaften Warnung mit Dauerton. Aus Funktionssicht ist das der sicherste Zustand. Der Fahrer erkennt durch den Dauerton einen Ausfall des Systems. Dieses Verhalten stammt noch aus der Zeit, als Parkhilfesysteme keine Anzeige hatten und rein akustisch ausgaben. Bei dem Kraftfahrzeug 10 kann aber auch eine optische Anzeige bereitgestellt sein, die beispielsweise die Messwerte D1, D2, D3, D4 veranschaulicht.

Um nun auch bei der Situation gemäß der Fig. 4 das Erzeugen eines Dauertons zu verhindern und beispielsweise auch die Messung gemäß der Fig. 2 zu plausibilisieren, kann vorgesehen sein, die Fahrgeschwindigkeit und die Dauer, für welche ein Hindernis erkannt wurde, mit zu berücksichtigen. Beispielsweise können die Ultraschallsensoren schon über dem kritischen Schwellenwert für das Ausschalten der Ultraschallsensoren, also hier 10 km/h, in einen Lauschbetrieb geschaltet werden. Dies kann beispielsweise bei einer Fahrgeschwindigkeit unterhalb einer Schwellgeschwindigkeit von beispielsweise 15 km/h begonnen werden. Es werden Hindernisse gemessen und bei Unterschreitung eines Mindestabstands kann zunächst überprüft werden, ob überhaupt ein plausibles Hindernis vorliegt. Eine Messung eines Abstands kleiner als ein vorbestimmter Mindestabstand oder ein konstanter Abstand über eine längere Zeit während der Fahrt sind unplausibel. Wenn das Kraftfahrzeug 10 beispielsweise mit 3,6 km/h fährt, legt es pro Sekunde 1 m zurück. Der kleinste, von den Ultraschallsensoren gemessene Abstand kann beispielsweise 20 bis 30 cm betragen. Ein vereister Sensor erzeugt ein Messsignal, das auf ein Hindernis in diesem Abstand hinweist. Wenn also diese Strecke bereits überfahren worden ist, weil das Fahrzeug beispielsweise eine Sekunde lang gerollt ist, und immer noch derselbe Abstand zu einem Hindernis durch einen Ultraschallsensor angezeigt wird, muss es sich um eine Fehlerkennung, beispielsweise durch Vereisung, oder um ein mitbewegtes Hindernis handeln. Aus dieser Analyse kann man darauf schließen, dass der Sensor nicht richtig arbeitet. In diesem Fall wird der Ultraschallsensor deaktiviert, das heißt sein Erfassungsbereich nicht mehr anhand der Messsignale des Ultraschallsensors selbst überwacht. Dem Fahrer kann eine entsprechende Störung gemeldet werden. Da nun eine solche Störung von einem tatsächlichen nahen Hindernis unterscheidbar ist, das eben nicht die Eigenbewegung des Kraftfahrzeugs 10 mit ausführt, muss nicht mehr dauerhaft gewarnt werden. Es kann bei jedem Aktivieren des Parkhilfesystems bzw. dem Ausschalten der Anzeige im Kraftfahrzeug für den Fahrer einmalig ein Fehler signalisiert werden und die akustische Warnung dann abgeschaltet werden. Eine optische Anzeige der Störung kann weiter bestehen bleiben.

Zusätzlich oder alternativ dazu kann auch ein Umfeldmodell, das heißt eine digitale Umfeldkarte, genutzt werden. Bei der Betrachtung der Messwerte eines Ultraschallsensors wird nicht mehr nur der einzelne Messwert betrachtet, also ein einzelner Abstandswert, sondern alle Abstandswerte aller Sensoren über der Zeit in einer Umfeldkarte gespeichert.

Diese Umfeldkarte wird beispielsweise mit einer Odometrieberechnung mit der Fahrzeugbewegung mitbewegt. Eine Erkennung eines fehlerhaft arbeitenden Ultraschallsensors, beispielsweise durch Blockade, ist nach dem gleichen Verfahren wie beschrieben möglich. Zusätzlich kann durch die Odometrieberechnung genau bestimmt werden, welcher Bereich für das Kraftfahrzeug vermessen wurde und welcher nicht. Dadurch kann eine Teilverfügbarkeit des Parkhilfesystems gewährleistet werden. Beispielsweise kann ein Ultraschallsensor rechts vorne (in Fig. 1 nicht dargestellt) blockiert sein. Ein Hindernis, welches mit einem Ultraschallsensor auf der linken Seite des Kraftfahrzeugs vermessen wurde, ist nach einer Linkskurve vor dem rechten Ultraschallsensor, der dieses Hindernis aber nicht erfasst. Anhand der Umfeldkarte kann dieses Objekt aber weiterhin geortet werden und entsprechend der Fahrer gewarnt werden, falls das Objekt zu nahe an dem Kraftfahrzeug 10 ist.

Insgesamt ergibt sich durch die Erfindung eine Verbesserung der Eiserkennung bei einem Einparkhilfesystem sowie eine Erkennung von blockierten Sensoren anhand eines Umfeldmodells.

## Patentansprüche

1. Verfahren zum Überprüfen eines ersten Ultraschallsensors (HL, HLM) eines Kraftfahrzeugs (10) auf eine Verdeckung durch ein Objekt, das an dem Kraftfahrzeug selbst angeordnet ist, indem
- durch eine Sendeeinheit (14) eine Membran des ersten Ultraschallsensors (HL, HLM) mit einem Anregungsimpuls beaufschlagt wird und
- durch eine Auswerteeinheit (20) ein Messsignal des ersten Ultraschallsensors (HL, HLM) erfasst und aus dem Messsignal eine Ausschwingdauer (T, T2) einer durch den Anregungsimpuls bewirkten Eigenschwingung der Membran ermittelt wird und
- aus dem Messsignal oder aus einem Messsignal eines zweiten Ultraschallsensors ein von einem in einem Erfassungsbereich (26, 28) des ersten Ultraschallsensors (HL, HLM) angeordneten Objekt (32) erzeugtes Echo des Anregungsimpulses ermittelt und anhand des Echos ein Abstandswert (D1, D2) des Objekts (32) ermittelt wird,
wobei durch die Auswerteeinheit (20) die Verdeckung signalisiert wird, falls die Ausschwingdauer (T1, T2) kleiner als ein vorbestimmter Schwellenwert ist, der überschritten würde, falls unmittelbar an der Membran Eis und/oder Schmutz haften würde, und der Abstandswert (D1, D2) kleiner als ein vorbestimmter Höchstwert ist, **dadurch gekennzeichnet, dass** durch die Auswerteeinheit (20) anhand des Abstandswerts (D1, D2) eine Position des Objekts (32) in eine in dem Kraftfahrzeug bereitgestellte digitale Umfeldkarte eingetragen wird, in welcher jeweilige relativ zum Kraftfahrzeug (10) ermittelte Positionen von zumindest mittels Ultraschallmessung erkannten Fremdobjekten gespeichert sind, wobei die Umfeldkarte auf der Grundlage einer odometrisch ermittelten Eigenbewegung des Kraftfahrzeugs (10) aktualisiert wird, und auf der Grundlage des Abstandswerts sowie in der Umfeldkarte eingetragener Positionen des Objekts (32) ermittelt wird, ob sich das Objekt mit dem Kraftfahrzeug (10) mitbewegt und nur für diesen Fall die Verdeckung signalisiert wird.

2. 1. Verfahren nach einem der vorhergehenden Ansprüche, wobei für den Fall, dass die Verdeckung signalisiert wird, in dem Erfassungsbereich (26, 28) des ersten Ultraschallsensors (HL, HLM) unabhängig vom Messsignal des ersten Ultraschallsensors (HL, HLM) anhand von Kartendaten der Umfeldkarte eine Abstandsmessung zu in der Umfeldkarte verzeichneten, von dem Objekt (32) verschiedenen Fremdobjekten durchgeführt wird.

3. Verfahren nach einem der vorhergehenden Ansprüche, wobei während eines Fahrbetriebs des Kraftfahrzeugs (10) die Verdeckung nur für eine vorbestimmte Höchstzeitdauer akustisch signalisiert wird.

4. Verfahren nach einem der vorhergehenden Ansprüche, wobei bei signalisierter Verdeckung der erste Ultraschallsensor (HL, HLM) von einem Abstandswarnsystem (24) des Kraftfahrzeugs (10) entkoppelt wird.

5. 7. Verfahren nach einem der vorhergehenden Ansprüche, wobei die Verdeckung über einen Kommunikationsbus (22) in dem Kraftfahrzeug (10) signalisiert wird.

6. Abstandsmessvorrichtung für ein Kraftfahrzeug (10), mit zumindest zwei Ultraschallsensoren (HL, HLM, HRM, HR) sowie einer Recheneinrichtung (20), die dazu ausgelegt ist, ein Verfahren nach einem der vorhergehenden Ansprüche durchzuführen.

7. Kraftfahrzeug (10) mit einer Abstandsmessvorrichtung gemäß Anspruch 6.

## Claims

1. Method for checking a first ultrasonic sensor (HL, HLM) of a motor vehicle (10) for concealment by an object that is arranged on the motor vehicle itself by virtue of
- a transmitting unit (14) applying an excitation pulse to a membrane of the first ultrasonic sensor (HL, HLM), and
- an evaluation unit (20) capturing a measurement signal from the first ultrasonic sensor (HL, HLM) and determining, from the measurement signal, an oscillation decay period (T, T2) of a natural oscillation of the membrane caused by the excitation pulse, and
- an echo of the excitation pulse that is generated by an object (32) arranged in a capture region (26, 28) of the first ultrasonic sensor (HL, HLM) being determined from the measurement signal or from a measurement signal from a second ultrasonic sensor and a distance value (D1, D2) of the object (32) being determined on the basis of the echo,
wherein the evaluation unit (20) signals the concealment if the oscillation decay period (T1, T2) is less than a predetermined threshold value which would be exceeded if ice and/or dirt were to directly adhere to the membrane, and the distance value (D1, D2) is less than a predetermined maximum value, **characterized in that** the evaluation unit (20) takes the distance value (D1, D2) as a basis for entering a position of the object (32) in a digital environment map which is provided in the motor vehicle and in which respective positions of foreign objects identified at least by means of an ultrasonic measurement are stored, which positions are determined relative to the motor vehicle (10), wherein the environment map is updated on the basis of an odometrically determined movement of the motor vehicle (10) itself, and it is determined, on the basis of the distance value and positions of the object (32) which are entered in the environment map, whether the object moves together with the motor vehicle (10) and the concealment is signalled only for this case.

2. Method according to one of the preceding claims, wherein, if the concealment is signalled, a distance measurement with respect to foreign objects which are noted in the environment map and differ from the object (32) is carried out in the capture region (26, 28) of the first ultrasonic sensor (HL, HLM) irrespective of the measurement signal from the first ultrasonic sensor (HL, HLM) on the basis of map data from the environment map.

3. Method according to one of the preceding claims, wherein the concealment is acoustically signalled only for a predetermined maximum period of time during a driving mode of the motor vehicle (10).

4. Method according to one of the preceding claims, wherein, if concealment is signalled, the first ultrasonic sensor (HL, HLM) is decoupled from a distance warning system (24) of the motor vehicle (10) .

5. Method according to one of the preceding claims, wherein the concealment is signalled using a communication bus (22) in the motor vehicle (10).

6. Distance measuring apparatus for a motor vehicle (10), having at least two ultrasonic sensors (HL, HLM, HRM, HR) and a computing device (20), which is designed to carry out a method according to one of the preceding claims.

7. Motor vehicle (10) having a distance measuring apparatus according to Claim 6.

## Revendications

1. Procédé permettant de contrôler qu'un premier capteur à ultrasons (HL, HLM) d'un véhicule automobile (10) est recouvert par un objet qui est disposé sur le véhicule automobile lui-même par le fait que
- une membrane du premier capteur à ultrasons (HL, HLM) est soumise à une impulsion d'excitation par une unité d'émission (14) et
- un signal de mesure du premier capteur à ultrasons (HL, HLM) est détecté par une unité d'évaluation (20) et une durée de décroissance (T, T2) d'une oscillation propre de la membrane, provoquée par l'impulsion d'excitation, est déterminée à partir du signal de mesure et
- un écho de l'impulsion d'excitation, qui est généré par un objet (32) disposé dans une zone de détection (26, 28) du premier capteur à ultrasons (HL, HLM), est déterminé à partir du signal de mesure ou d'un signal de mesure d'un deuxième capteur à ultrasons et une valeur de distance (D1, D2) de l'objet (32) est déterminée sur la base de l'écho,
l'unité d'évaluation (20) signalant le recouvrement si la durée de décroissance (T1, T2) est inférieure à une valeur seuil prédéterminée, qui serait dépassée si de la glace et/ou de la saleté adhéraient directement à la membrane, et si la valeur de distance (D1, D2) est inférieure à une valeur maximale prédéterminée, **caractérisé en ce que**
une position de l'objet (32) est entrée par l'unité d'évaluation (20), sur la base de la valeur de distance (D1, D2), dans une carte d'environnement numérique qui est prévue dans le véhicule automobile et dans laquelle des positions respectives, déterminées par rapport au véhicule automobile (10), sont mémorisées par des objets étrangers détectés au moins au moyen d'une mesure par ultrasons, la carte d'environnement étant actualisée sur la base d'un mouvement propre, déterminé par odométrie, du véhicule automobile (10), et une détermination étant effectuée, sur la base de la valeur de distance et des positions de l'objet (32) entrées dans la carte d'environnement, pour savoir si l'objet se déplace avec le véhicule automobile (10) et si, uniquement dans ce cas, le recouvrement est signalé.

2. Procédé selon l'une des revendications précédentes, dans le cas où le recouvrement est signalé, une mesure de distance par rapport à des objets étrangers enregistrés dans la carte d'environnement et différents de l'objet (32) étant effectuée dans la zone de détection (26, 28) du premier capteur à ultrasons (HL, HLM) indépendamment du signal de mesure du premier capteur à ultrasons (HL, HLM) sur la base de données cartographiques de la carte d'environnement.

3. Procédé selon l'une des revendications précédentes, pendant la conduite du véhicule automobile (10), le recouvrement n'étant signalé par des moyens acoustiques que pendant une durée maximale prédéterminée.

4. Procédé selon l'une des revendications précédentes, le premier capteur à ultrasons (HL, HLM) d'un système d'avertissement de distance (24) du véhicule automobile (10) étant découplé lorsqu'un recouvrement est signalé.

5. Procédé selon l'une des revendications précédentes, le recouvrement étant signalé par le biais d'un bus de communication (22) dans le véhicule automobile (10).

6. Dispositif de mesure de distance d'un véhicule automobile (10), ledit dispositif comprenant au moins deux capteurs à ultrasons (HL, HLM, HRM, HR) et un module informatique (20) qui est conçu pour mettre en œuvre un procédé selon l'une des revendications précédentes.

7. Véhicule automobile (10) comprenant un dispositif de mesure de distance selon la revendication 6.
